# EUROPEAN PATENT SPECIFICATION

(11) **EP 2 363 306 B1**
(45) Date of publication and mention of the grant of the patent: **13.01.2016**
(21) Application number: 11156693.1
(22) Date of filing: 02.03.2011
(51) Int. Cl.: B60D 1/04, B60D 1/18, B60D 1/36

(54) **System and method for automated tow coupling**
System und Verfahren für automatisierte Anhängerkupplung
Système et procédé de couplage de remorquage

(30) Priority: 02.03.2010 US 309656 P
(43) Date of publication of application: 07.09.2011
(73) Proprietor: Tal & Hadas Ltd., 18550 Afula (IL)
(72) Inventor: Tayar, Eliahu, 19125, Tzvi (IL)
(74) Representative: Dr. Graf & Partner AG

(56) References cited:
- US-A- 5 261 687
- US-A1- 2008 157 507

## Description

### BRIEF DESCRIPTION OF THE DRAWINGS

The subject matter regarded as the invention is particularly pointed out and distinctly claimed in the concluding portion of the specification. The preamble of claim 1 is shown in document US 2008/0157507 A1. The invention, however, both as to organization and method of operation, together with objects, features, and advantages thereof, may best be understood by reference to the following detailed description when read with the accompanying drawings in which:

Figs. 1A and 1B are schematic illustrations of a towing unit and towed unit of an automated tow coupling system according to some embodiments of the present invention;

Figs. 2A, 2B and 2C are schematic side-view illustrations of an automated tow coupling system according to some embodiments of the present invention;

Fig. 3 is a schematic top view illustration of an automated tow coupling system according to some embodiments of the present invention;

Figs. 4A and 4B are schematic partial top view illustrations of an automated tow coupling system according to some embodiments of the present invention;

Fig. 5 is a schematic top view illustration of an automated tow coupling system according to some embodiments of the present invention; and

Fig. 6 is a flow chart illustrating a method for automated tow coupling according to some embodiments of the present invention..

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention.

Embodiments of the present invention may provide a tow coupling system, which facilitates quick automated fastening of a towing unit to a towed unit by a hook connected to the towing unit and a cable connected to the towed unit by a detachable unit. When the cable connected to the detachable unit is pulled by the towing unit, the detachable unit detaches from an adapter connected to the towed vehicle, and remains connected to the vehicle by chains. Therefore, the pulling forces during towing are operated on the cable and chains only. Therefore, the tow coupling system according to the present invention may be relatively light and cheap and does not require massive connectors durable under the pulling forces.

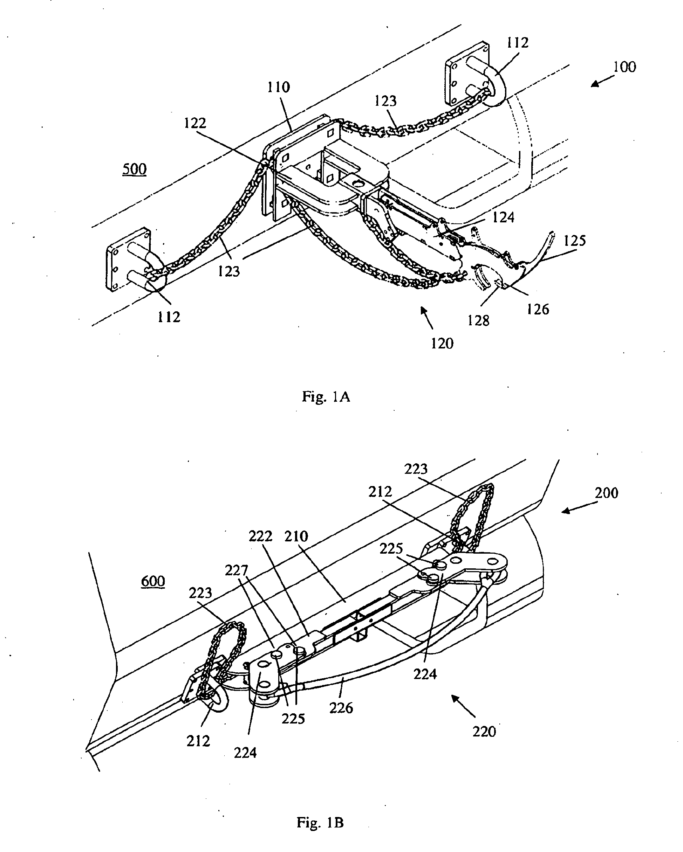

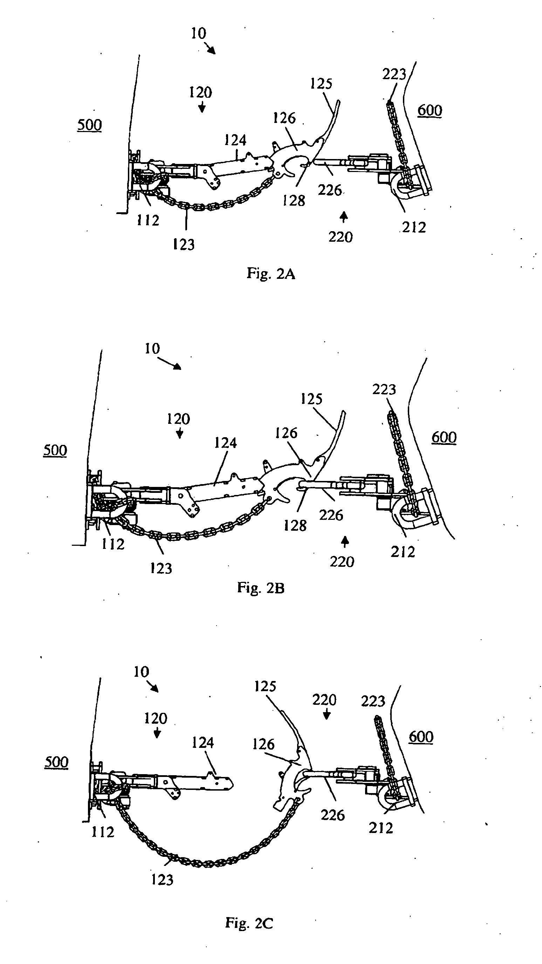

Reference is now made to Figs. 1A and 1B, which are schematic illustrations of a towing unit 100 and towed unit 200 of an automated tow coupling system 10 (a view of the whole system 10 is shown in Figs. 2A-2C, 3 and 5) according to some embodiments of the present invention. Towing unit 100 may be connected to a rear portion of a towing vehicle 500, and towed unit 200 may be connected to a front portion of a vehicle 600 to be towed, for example, by vehicle 500. In some embodiments towed unit 200 may be used for towing non-vehicle units, such as a big container, or the like.

Towing unit 100 may include a permanent connector 110 and rings 112, which may be permanently or otherwise connected to a towing portion, such as a rear portion, of a towing vehicle 500. Additionally, towing unit 100 may include a mounted towing unit 120 which may be mounted on permanent connector 110. Mounted towing unit 120 may include an adapter 122, an arm 124, a hook 126, an elevation guide 125 and a chain 123. Adapter 122 may be installed on permanent connector 110 so as to enable connection of mounted towing unit 120 to permanent connector 110. Arm 124 may be pivotally connected to adapter 122. Hook 126 may be detachably connected to a distal end of arm 124, for example such as to enable detaching of hook 126 from arm 124 when a pulling force is operated on hook 126, for example when hook 126 is fastened to towed unit 200 and/or when towing vehicle 500 moves away from vehicle 600 and thus, for example, detaches and draws arm 124 away from hook 126. In some embodiments of the present invention, a mechanism may cause detachment of hook 126 from arm 124 upon fastening of hook 126 to towed unit 200 and thus pulling hook 126 away from arm 124. Chain 123 may also be, in some embodiments, a cable or a rope or any other suitable strong and flexible prolonged connection means, adapted to provide the required towing force. Distal ends of chain 123 may be connected to rings 112. Additionally, chain 123 may be connected to hook 126 so that, for example, hook 126 may remain connected to rings 112 by chain 123 when hook 126 is detached from arm 124. Elevation guide 125 may facilitate connection of hook 126 to towed unit 200, as described in more detail herein below.

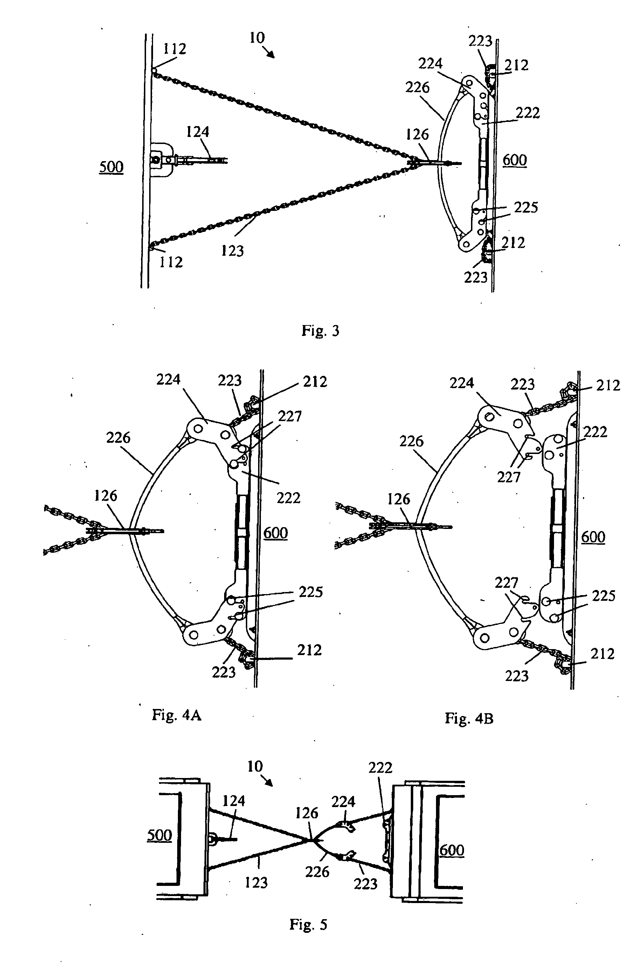

Towed unit 200 may include a permanent connector 210 and rings 212, which may be permanently or otherwise connected to a towed portion, such as front portion of towed vehicle 600. Additionally, towed unit 200 may include a mounted towed unit 220, which may be mounted on permanent connector 210. Mounted towed unit 220 may include an adapter 222, one or more detachable units 224, a cable 226 and chains 223. Adapter 222 may be installed on permanent connector 210 so as to enable connection of mounted towed unit 220 to permanent connector 210. Detachable unit 224 may be detachably connected to adapter 222 by any suitable detachable connectors, for example, snapping connectors. For example, detachable unit 224 may be detachably connected to adapter 222 by pins 225 which may snap into, or out of slots 227 (which are shown more clearly in Figs. 4A and 4B). Two distal ends of cable 226 may be attached to detachable units 224. Cable 226 may have a desired amount of stiffness which ensures that it substantially maintains its shape and position with respect to detachable units 224 and does not, for example, collapse downwardly before engagement with hook 126 occurs, for example due to its self weight. When the rear portion of vehicle 500 advances towards the front portion of vehicle 600, hook 126 becomes in contact with cable 226. Cable 226 may be stable enough and/or may be held firmly by detachable unit 224, so as to prevent excessive movement of the cable and thus, for example, enabling automated connection to hook 126 as described below. As vehicle 500 continues advancing towards vehicle 600, elevation guide 125 causes hook 126 to rise above cable 226. As vehicle 500 comes nearer to vehicle 600, tip 128 of hook 126 may pass cable 226. Then, hook 126 may slide down on cable 226 and become fastened to cable 226, thus completing an automated connection process. After hook 126 is fastened to cable, vehicle 500 may move away from vehicle 600. At a certain stage when vehicle 500 is moving away from vehicle 600 and certain pulling force is provided via hook 126 to cable 226, hook 126 may pull cable 226 and thus, for example, detachable units 224 may be detached from adapter 222. For example, pins 225 may be snapped out from slots 227. Chains 223 may be connected at one distal end to rings 212 and at other distal end to detachable units 224 so that, for example, detachable units 224 may remain connected to rings 212 by chains 223 when detachable units 224 are detached from adapter 222.

Reference is now made to Figs. 2A, 2B and 2C, which are schematic side-view illustrations of automated tow coupling system 10 according to some embodiments of the present invention. Figs. 2A, 2B and 2C show the process of coupling of hook 126 to cable 226. In Figs. 2A, 2B and 2C, the same referral numbers refer to the same elements of system 10 as in Figs. 1A and 1B.

As mentioned above, when vehicle 500 advances towards vehicle 600, hook 126 becomes in contact with cable 226, as shown in Fig. 2A. Elevation guide 125 facilitates and/or guides hook 126 upwards and above 226 when vehicle 500 continues advancing towards vehicle 600, thus compensating for a large height differences between vehicle 500 and vehicle 600. When edge 128 passes cable 226, hook 126 descends on cable 226 and becomes fastened to cable 226, as shown in Fig. 2B. When hook 126 is fastened to cable 226 and/or when towing vehicle 500 moves away from vehicle 600, hook 126 may detach from arm 124, as shown in Fig. 2C. In some embodiments of the present invention, a mechanism may cause detachment of hook 126 from arm 124 upon fastening of hook 126 to cable 226. When hook 126 detaches from arm 124, hook 126 remains connected to rings 112 by chain 123, as shown in Fig. 2C.

Reference is now made to Fig. 3, which is a schematic top view illustration of automated tow coupling system 10 according to some embodiments of the present invention. In Fig. 3, the same referral numbers refer to the same elements of system 10 as in the previous figures. As discussed above, when hook 126 detaches from arm 124, hook 126 remains connected to rings 112 by chain 123. As vehicle 500 continues advancing away from vehicle 600, chain 123 stretches as shown in Fig. 3. At a certain stage, for example when chain 123 is sufficiently or fully stretched, hook 126 starts pulling cable 226.

Reference is now made to Figs. 4A and 4B, which are schematic partial top view illustrations of automated tow coupling system 10 according to some embodiments of the present invention. In Figs. 4A and 4B, the same referral numbers refer to the same elements of system 10 as in the previous figures. Figs. 4A and 4B show different stages of detachment of detachable units 224 from adapter 222. When hook 126 pulls cable 226 with a pulling force higher than a certain amount, detachable units 224 detach from adapter 222. In some embodiments, detachable units 224 are detachably connected to adapter 222 by any suitable detachable connectors, for example, snapping connectors. For example, detachable units 224 are detachably connected to adapter 222 by pins 225 which may respectively snap into slots 227. When hook 126 pulls cable 226, detachable units 224 may detach from adapter 222 by snapping pins 225 out of slots 227. When detachable units 224 detaches from adapter 222, it remains connected to rings 212 by chains 223.

Reference is now made to Fig. 5, which is a schematic top view illustration of automated tow coupling system 10 according to some embodiments of the present invention. In Fig. 5, the same referral numbers refer to the same elements of system 10 as in the previous figures. Fig. 5 shows the configuration of tow coupling system 10 after detachable units 224 detach from adapter 222 and remain attached to rings 212 by chains 223. As vehicle 500 continues moving away from vehicle 600, chains 223 stretch. At a certain stage, for example when chains 223 are sufficiently or fully stretched, dragging of vehicle 600 by vehicle 500 is initiated, wherein the connection between vehicle 500 and vehicle 600 is by chains 123 and 223 connected at rings 112 and 212, respectively.

It would be appreciated by those skilled in the art that automated tow coupling system 10 may facilitate automated connection of a towing vehicle to a towed one without needing human assistance or intervention, thus allowing, for example, soldiers in a battle field who are under threat or fire to remain protected inside their armored vehicles while a towing armored vehicle is connecting and then towing a faulty armored vehicle, away from the scene. Automated tow coupling system 10 allows taking advantage of existing towing points, such as rings 112, 212, adapted to stand high towing forces, which are typically provided with an armored vehicle and provide an automated connecting system which is relatively light-weight and simple thus ensuring high yield and low at-field

### MTBF.

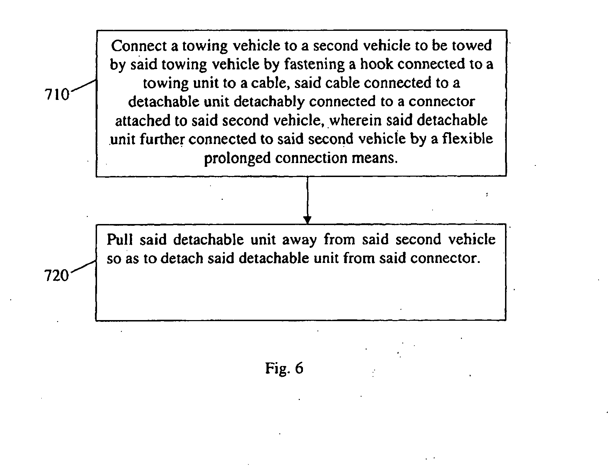

Reference is now made to Fig. 6, which is a flow chart illustrating a method for automated tow coupling according to some embodiments of the present invention. As shown in block 710, the method may include connecting a towing vehicle to a second vehicle to be towed by said towing vehicle by fastening a hook connected to a towing unit to a cable, said cable connected to a detachable unit detachably connected to a connector attached to said second vehicle, wherein said detachable unit further connected to said second vehicle by a flexible prolonged connection means. As shown in block 720, the method may include pulling said detachable unit away from said second vehicle so as to detach said detachable unit from said connector.

While certain features of the invention have been illustrated and described herein, many modifications, substitutions, changes, and equivalents will now occur to those of ordinary skill in the art. It is, therefore, to be understood that the scope of the appended claims are intended to cover all such modifications and changes.

## Claims

1. A system for automated tow coupling, the system comprising:
a towing unit configured for connection to a towing vehicle and having a hook connected therein;
a towed unit configured for connection to a second vehicle, said second vehicle to be towed by said towing vehicle, the towed unit comprising:
a detachable unit configured to be detachably connected to a connector attached to said second vehicle;
a cable connected to the detachable unit, wherein said hook is configured for automated fastening to said cable when said towing vehicle advances towards said second vehicle; **characterized in that**
a first flexible prolonged connection means is connected to the detachable unit, said connection means is configured to be connected to said second vehicle at a distal end of said connection means, wherein when said detachable unit is pulled away from said second vehicle, it detaches from said connector and remains connected to said second vehicle by said first flexible prolonged connection means.

2. A system according to claim 1, wherein said towing unit further comprising:
an arm, wherein said hook is detachably connected to a distal end of said arm;
a second flexible prolonged connection means connected in an intermediate portion of said second connection means to said detachable hook and connected at distal ends of said second connection means to said towing vehicle, wherein when said detachable hook is pulled away from said first vehicle, it detaches from said arm and remains connected to said first vehicle by said second flexible prolonged connection means.

3. A system according to claim 1, wherein said detachable unit comprises slots, and said connector comprises pins, said pins are configured for snapping connection with said slots, wherein when said detachable unit is pulled away from said second vehicle, said pins are snapped out from said slots.

4. A method for automated tow coupling, the method comprising:
connecting a towing vehicle to a second vehicle to be towed by said towing vehicle by fastening a hook connected to a towing unit to a cable, said cable connected to a detachable unit detachably connected to a connector attached to said second vehicle, wherein said detachable unit is further connected to said second vehicle by a first flexible prolonged connection means; and
pulling said detachable unit away from said second vehicle so as to detach said detachable unit from said connector, said detachable unit remains connected to said second vehicle by said first flexible prolonged connection means.

5. A method according to claim 4, further comprising, after connecting:
moving said towing vehicle away from said second vehicle, so as to detach said hook from said towing unit, said hook remains connected to said first vehicle by a second flexible prolonged connection means.

6. A method according to claim 5, wherein said pulling is by further moving said towing vehicle away from said second vehicle after said second flexible prolonged connection means is sufficiently stretched.

7. A method according to claim 6, further comprising dragging said second vehicle by said towing vehicle by continuing movement of said towing vehicle after said first flexible prolonged connection means is sufficiently stretched.

## Patentansprüche

1. System zur automatisierten Zugkupplung, wobei das System Folgendes umfasst:
eine Zugeinheit, die zur Verbindung mit einem Zugfahrzeug konfiguriert ist und einen darin verbundenen Haken aufweist;
eine gezogene Einheit, die zur Verbindung mit einem zweiten Fahrzeug konfiguriert ist, wobei das zweite Fahrzeug von dem Zugfahrzeug gezogen werden soll, wobei die gezogene Einheit Folgendes umfasst:
eine lösbare Einheit, die zur lösbaren Verbindung mit einem Verbinder, der am zweiten Fahrzeug angebracht ist, konfiguriert ist;
ein Seil, das mit der lösbaren Einheit verbunden ist, wobei der Haken zur automatisierten Befestigung des Seil, wenn sich das Zugfahrzeug auf das zweite Fahrzeug zu bewegt, konfiguriert ist;
**dadurch gekennzeichnet, dass**
ein erstes flexibles verlängertes Verbindungsmittel mit der lösbaren Einheit verbunden ist, wobei das Verbindungsmittel zur Verbindung mit dem zweiten Fahrzeug an einem distalen Ende des Verbindungsmittels konfiguriert ist, wobei sich die lösbare Einheit, wenn sie vom zweiten Fahrzeug weg gezogen wird, von dem Verbinder löst und durch das erste flexible verlängerte Verbindungsmittel mit dem zweiten Fahrzeug verbunden bleibt.

2. System nach Anspruch 1, wobei die Zugeinheit ferner Folgendes umfasst:
einen Arm, wobei der Haken mit einem distalen Ende des Arms lösbar verbunden ist;
ein zweites flexibles verlängertes Verbindungsmittel, das in einem Zwischenabschnitt des zweiten Verbindungsmittels mit dem lösbaren Haken verbunden und an distalen Enden des zweiten Verbindungsmittels mit dem Zugfahrzeug verbunden ist, wobei sich der lösbare Haken, wenn er von dem ersten Fahrzeug weg gezogen wird, von dem Arm löst und durch das zweite flexible verlängerte Verbindungsmittel mit dem ersten Fahrzeug verbunden bleibt.

3. System nach Anspruch 1, wobei die lösbare Einheit Schlitze umfasst und der Verbinder Stifte umfasst, wobei die Stifte zur Schnappverbindung mit den Schlitzen konfiguriert sind, wobei die Stifte, wenn die lösbare Einheit von dem zweiten Fahrzeug weg gezogen wird, aus den Schlitzen ausschnappen.

4. Verfahren zur automatisierten Zugkupplung, wobei das Verfahren Folgendes umfasst:
Verbinden eines Zugfahrzeugs mit einem zweiten Fahrzeug, das durch das Zugfahrzeug gezogen werden soll, durch Befestigen eines mit einer Zugeinheit verbundenen Hakens an einem Seil, wobei das Seil mit einer lösbaren Einheit verbunden ist, die mit einem Verbinder, der am zweiten Fahrzeug angebracht ist, lösbar verbunden ist, wobei die lösbare Einheit ferner durch ein erstes flexibles verlängertes Verbindungsmittel mit dem zweiten Fahrzeug verbunden ist; und
Ziehen der lösbaren Einheit von dem zweiten Fahrzeug weg, um die lösbare Einheit von dem Verbinder zu lösen, wobei die lösbare Einheit durch das erste flexible verlängerte Verbindungsmittel mit dem zweiten Fahrzeug verbunden bleibt.

5. Verfahren nach Anspruch 4, das ferner nach dem Verbinden Folgendes umfasst:
Bewegen des Zugfahrzeugs von dem zweiten Fahrzeug weg, um den Haken von der Zugeinheit zu lösen,
wobei der Haken durch ein zweites flexibles verlängertes Verbindungsmittel mit dem ersten Fahrzeug verbunden bleibt.

6. Verfahren nach Anspruch 5, wobei das Ziehen durch Bewegen des Zugfahrzeugs weiter vom zweiten Fahrzeug weg, nachdem das zweite flexible verlängerte Verbindungsmittel ausreichend gedehnt wurde, erfolgt.

7. Verfahren nach Anspruch 6, das ferner Schleppen des zweiten Fahrzeugs durch das Zugfahrzeug durch kontinuierliche Bewegung des Zugfahrzeugs, nachdem das erste flexible verlängerte Verbindungsmittel ausreichend gedehnt wurde, umfasst.

## Revendications

1. Système d'accouplement de remorquage automatique, le système comprenant :
une unité de remorquage conçue pour être connectée à un véhicule de remorquage et ayant un crochet connecté audit véhicule de remorquage ;
une unité remorquée conçue pour être connectée à un second véhicule, ledit second véhicule étant remorqué par ledit véhicule de remorquage, l'unité remorquée comprenant :
une unité désolidarisable conçue pour être connectée de manière désolidarisable à un connecteur solidaire dudit second véhicule ;
un câble connecté à l'unité désolidarisable, ledit crochet étant conçu pour se fixer automatiquement audit câble quand ledit véhicule de remorquage avance vers ledit second véhicule ;
**caractérisé en ce qu'**un premier moyen de connexion prolongé flexible est connecté à l'unité désolidarisable, ledit moyen de connexion étant conçu pour être connecté audit second véhicule à une extrémité distale dudit moyen de connexion, dans lequel quand ladite unité désolidarisable est tirée à l'opposé dudit second véhicule, elle se désolidarise dudit connecteur et reste connectée audit second véhicule par ledit premier moyen de connexion prolongé flexible.

2. Système selon la revendication 1, dans lequel ladite unité de remorquage comprend en outre :
un bras, dans lequel ledit crochet est connecté de manière désolidarisable à une extrémité distale dudit bras ;
un second moyen de connexion prolongé flexible connecté dans une partie intermédiaire dudit second moyen de connexion audit crochet désolidarisable, et connecté au niveau des extrémités distales dudit second moyen de connexion audit véhicule de remorquage, dans lequel quand ledit crochet désolidarisable est tiré à l'opposé dudit premier véhicule, il se désolidarise dudit bras et reste connecté audit premier véhicule par ledit second moyen de connexion prolongé flexible.

3. Système selon la revendication 1, dans lequel ladite unité désolidarisable comprend des rainures, et ledit connecteur comprend des goupilles, lesdites goupilles étant conçues pour se connecter par encliquetage dans lesdites rainures, dans lequel quand ladite unité désolidarisable est tirée à l'opposé dudit second véhicule, lesdites goupilles sont décliquetées desdites rainures.

4. Procédé d'accouplement de remorquage automatique, le procédé consistant à :
connecter un véhicule de remorquage à un second véhicule devant être remorqué par ledit véhicule de remorquage en fixant un crochet connecté à une unité de remorquage à un câble, ledit câble étant connecté à une unité désolidarisable connectée de manière désolidarisable à un connecteur solidaire dudit second véhicule, ladite unité désolidarisable étant en outre connectée audit second véhicule par un premier moyen de connexion prolongé flexible ; et
tirer ladite unité désolidarisable à l'opposé dudit second véhicule de manière à désolidariser ladite unité désolidarisable dudit connecteur, ladite unité désolidarisable restant connectée audit second véhicule par ledit premier moyen de connexion prolongé flexible.

5. Procédé selon la revendication 4, consistant en outre, après la connexion, à :
déplacer ledit véhicule de remorquage à l'opposé dudit second véhicule, de manière à désolidariser ledit crochet de ladite unité de remorquage, ledit crochet restant connecté audit premier véhicule par un second moyen de connexion prolongé flexible.

6. Procédé selon la revendication 5, dans lequel ledit tirage s'effectue en déplaçant davantage ledit véhicule de remorquage à l'opposé dudit second véhicule une fois que ledit second moyen de connexion prolongé flexible est suffisamment étiré.

7. Procédé selon la revendication 6, consistant en outre à traîner ledit second véhicule par ledit véhicule de remorquage en continuant le déplacement dudit véhicule de remorquage une fois que ledit premier moyen de connexion prolongé flexible est suffisamment étiré.
